# EUROPEAN PATENT SPECIFICATION

(11) **EP 3 210 479 B1**
(45) Date of publication and mention of the grant of the patent: **10.06.2020**
(21) Application number: 17150729.6
(22) Date of filing: 05.08.2011
(51) Int. Cl.: A23L 29/238, A23L 29/25, A23L 29/256

(54) **FOOD PRODUCT COMPRISING A BASE INGREDIENT COMPRISING CEREAL SEEDS**
LEBENSMITTELPRODUKT MIT EINER GRUNDZUTAT AUS GETREIDESAMEN
PRODUIT ALIMENTAIRE COMPRENANT UN INGRÉDIENT DE BASE CONTENANT DES CÉRÉALES EN GRAINS

(30) Priority: 05.08.2010 IT VR20100164
(43) Date of publication of application: 30.08.2017
(62) Divisional of application: 11769921.5
(73) Proprietor: Mister Bio Food S.r.l., 36070 Crespadoro (Vicenza) (IT); Frescolat S.r.l., 31031 Caerano di San Marco (TV) (IT)
(72) Inventor: VESSIO, Francesco, 36070 Crespadoro (Vicenza) (IT); TONIN, Pia, 36070 Crespadoro (Vicenza) (IT); BUFFOLO, Andrea, 36070 Crespadoro (Vicenza) (IT)
(74) Representative: Dragotti, Gianfranco

(56) References cited:
- EP-A1- 0 131 075
- WO-A1-2005/002367
- WO-A1-2010/023351
- WO-A2-2011/039308
- GB-A- 609 704
- GB-A- 1 466 479
- US-A- 3 885 048

## Description

### TECHNICAL FIELD OF THE INVENTION

The present invention concerns a food product comprising a base ingredient comprising cereal seeds.

### STATE OF THE ART

In the food industry, continuous development and research is carried out in order to obtain food products of better quality and organoleptic characteristics, in order to improve the health and well-being of the users of such products.

Moreover, with the increasingly widespread occurrence of allergies and food intolerances, a need has arisen to identify products of natural origin, often biological, which do not contain irritant and allergenic substances. In this way, these products can be used safely by a wide range of users, even those suffering from the aforementioned intolerances and allergies.

WO201002351 relates to an oat suspension, a process for preparation thereof and a powder made thereof. The suspension and the powder can be used for preparing drinks and other non-dairy products with improved sensory properties.

WO2005/002367 relates to therapeutic compositions, suitable for improving the serum lipid profile and comprising protein or protein hydrolysates and emulsifying lipids, and food products made from oat fractions.

WO2011/039308 discloses composition for a gluten-free foodstuff containing omega-3 fatty acids. Said composition has ingredients such as: flour and/or bran from at least one gluten-free plant; a fibre powder based on soya, oats and/or psyllium seeds; ground oil seeds and/or kernels and/or nuts; and press cakes from oil seeds and/or kernels and/or nuts.

The food products object of the present invention are completely organic and do not contain substances that can be poorly tolerated by users suffering from certain intolerances and/or pathologies and/or specific dietary requirements such as: saccharose, lactose, egg and soybean.

### PURPOSES OF THE INVENTION.

A purpose of the present invention is to provide a vegetable based-food product that comprises cereal seeds.

According to an aspect of the present invention, these purposes are achieved by a food product as specified in independent claim 1.

The dependent claims refer to preferred and advantageous embodiments of the invention.

### EMBODIMENTS OF THE INVENTION.

The object of present invention is a vegetable food product, free from saccharose, lactose, egg and soybean, comprising a base ingredient, wherein said base ingredient comprises water and micronized particles of gluten-free wholegrain cereal seeds, and is in the form of a fluid and/or anhydrous powder, wherein said micronized particles have a size of less than 30 microns, wherein said vegetable food product further comprises thickeners, of natural and/or artificial origin which determine an increase in the density and consistency of the base ingredient, and flavourings, which flavourings give said food product a food substitute character for cheese wherein:
- said gluten-free cereals are selected from the group consisting of rice, corn, millet, buckwheat, sorghum, amaranth, quinoa;
- said thickeners comprise carrageenan and/or agar-agar and/or starches and/or carob seeds and/or guar and/or xanthan;
- said flavourings comprise diacetyl and butyric acid, to give a butter flavour, and/or valerenic acid and/or isobutyric acid, to give a cheese flavour and/or heptanonemethylthiobutyrate, to give a gorgonzola flavour,
and
wherein said food product comprises lipids, such as coconut oil and/or olive oil, and/or seed oil and/or vegetable oil and/or vegetable margarines, and said food product is pasteurised or treated at a pressure within a range between 3000 and 15000 bar.

The most important cereals from which such seeds are obtained are: corn and/or rice and/or sorghum and/or millet and/or rye and/or buckwheat.

In a further disclosure, the base ingredient consists of seeds derived from gluten-free cereals. In this case, the gluten-free cereals are selected from the group consisting of: rice, corn, millet, buckwheat, sorghum, amaranth, quinoa.

Cereals provide most of its nutritional energy as starch and they are also important sources of protein, as well as vitamins, amino acids and mineral salts.

The seeds derived from the aforementioned cereals can consist of polished and/or whole grains. The latter are so called wholegrain seeds, which keep the bran and the germ, and in this way are richer in fibre, fatty acids and other precious substances for the body.

The seeds derived from cereals can, in a further disclosure, not pertaining to the invention, be semi-wholegrain, in other words seeds in which just a most outer part of the kernel is eliminated.

In a preferred but not exclusive embodiment, such wholegrain seeds are sprouted seeds and/or said seeds are rice seeds.

In a further disclosure, not pertaining to the invention, the base ingredient can comprise, in addition to the aforementioned seeds derived from cereals, also seeds derived from legumes.

The most important legumes for obtaining the aforementioned food product are: beans and/or broad beans and/or peas and/or lupins and/or chickpeas and/or peanuts and /o soybean and/or lentils, etc.

In an alternative disclosure, not pertaining to the invention, in order to obtain the aforementioned food product soybean is not used, due to the allergy and/or intolerance problems that it can cause in some users. In this case, the base ingredient comprises legume seeds selected from the group consisting of beans and/or broad beans and/or peas and/or lupins and/or chickpeas and/or lentils and/or chickling and/or peanuts and/or fabecee and/or trees like acacia (Acacia) and/or pagoda tree (Sophora) and/or false acacia (Robinia pseudoacacia) and/or carub tree (Ceratonia siliqua).

In general, legume seeds contain proteins and also supply a large amount of energy, consisting mostly of carbohydrates. Moreover, they are a source of folic acid, vitamin B1, vitamin H, various minerals including iron, zinc and magnesium, fibres, etc.

In a further disclosure, the base ingredient comprises seeds obtained in general from edible and/or officinal herbs, like, for example, taraxacum, garlic, aloe, laurel, camomile, etc.

The food product according to the present disclosure comprises water and/or pure water and/or purified water and/or mineral water and/or spring water.

The use of seeds to make the base ingredient, in particular, in the presence of sprouted seeds, determines a particular sensitivity to the attack of pathogens, such as bacteria, fungi or microorganisms in general.

The processing according to the present disclosure, as better described hereafter, makes it possible to overcome this drawback, managing to keep microbiological contamination under control and allowing a microbiologically stable food product to be obtained.

The base ingredient according to the present disclosure comprises wholegrain seeds.

Such seeds, moreover, are micronized in order to obtain micronized particles. Such micronized seeds have, also for the fibrous components, a size of the particles of less than about 30 microns. Preferably, such a size is less than 27 microns, if the micronization step occurs under a pressure of between 50 and 1500 bar. Such a micronization process can also take place completely in water to avoid the possible oxidation of the seeds that, normally, occurs with conventional grinding.

The base product, according to the disclosure comprises a high-pressure step, the optimal range of which is between 3000 and 15000 bar, to avoid the use of heat treatments (for example pasteurization or UHT treatments) which can alter the organoleptic properties of the base ingredient itself.

The food product according to the present disclosure also comprises thickeners and flavourings that can modify its consistency, flavour and/or composition.

The thickeners can be of natural and/or artificial origin and determine an increase in the density and consistency of the base ingredient.

Such thickeners comprise, for example, carrageenan and/or agar-agar and/or starches and/or carob seeds and/or guar and/or xanthan and/or, in general, substances commonly used for such a purpose.

The flavourings included in the food product according to the disclosure, not pertaining to the invention, can be of various kind, usually able to be used in the food industry, of the natural and/or artificial type.

Such aromatic molecules comprise: benzaldehyde or benzoic aldehyde, for example to give an almond and black cherry flavour and/or anethole, for example to give an aniseed flavour and/or g-nonalactone, for example to give a coconut flavour and/or eugenol, for example to give a cinnamon flavour and/or menthol, for example to give a balsam flavour and/or diacetyl and butyric acid, for example to give a butter flavour and/or L-carvone, for example to give a peppermint flavour and/or vanillin and/or ethylvanillin, for example to give a vanilla flavor and/or bismethylthiomethane, for example to give a truffle flavour and/or phenylmethylbutyrate, for example to give an apple flavour and/or ethyl butanoate,for example to give a vinegar flavour and/or ethyl acetate, for example to give a kiwi flavor and/or amylacetateisovalerianateisomyl and/orYlang Ylang, for example to give a banana flavour and/or fencone, for example to give a fennel flavour and/or apiol, for example to give a parsley flavour and/or furylmethanethiol and/or alpha- furfurylmercaptan, for example to give a coffee flavour and/or β-damascenonetetramethlpyrazine, for example to give a tea flavour and/or phenylacetic acid and/or fenilethyl acetate, for example to give a honey flavour and/or g-undecalactone, for example to give a peach flavour and/or allyl caproate, for example to give a pineapple flavour and/or frambinone and/or raspberry ketone, for example to give a raspberry flavour and/or ethyl cinnamate, for example to give a cherry flavour and/or methylethylbutanoate, for example to give a red fruit flavour and/or methylthiopropanol, for example to give a boiled potato flavour and/or diallyl disulphide, for example to give a garlic flavour and/or allylpropyl disulphide, for example to give an onion flavour and/or methoxymethylpyrazine, for example to give a pepper flavour and/or heptanoloctanol alcohol, for example to give a mushroom flavour and/or valerenic acid and/or isobutyric acid, for example to give a cheese flavour and/or heptanonemethylthiobutyrate, for example to give a gorgonzola flavour and/or trimethylamine, for example to give a fish flavor and/or methylpyridylketone, for example to give a popcorn flavour and/or ethylhydroxybutanoate, for example to give a meringue flavour and/or pyroligneous acid, for example to give a smoked flavour and/or furaneol, for example to give a strawberry flavour and/or methoxymethylpyrazine, for example to give a toasted hazelnut flavour and/or other flavourings usually used for such a purpose, etc.

The aforementioned flavourings also comprise the aromatic molecules usually used to flavour processed meats and/or the flavourings of aromatic plants, both of the natural and synthetic type, and/or beechwood smoke, and/or spices and/or flavourings for spices, etc. The food product according to the present disclosure comprises lipid or fatty acids, which are emulsified to give particular characteristics of creaminess and consistency to the product itself.

Such lipids comprise coconut oil and/or olive oil and/or seed oil and/or vegetable oil in general and/or vegetable margarine, etc.

The food product according to the present disclosure does not contain animal components or fats and is completely vegetable. Moreover, it does not contain cholesterol, preservatives, lactose, or chemical dyes. In a particular version, the food product comprises just substances allowed for biological agriculture, as indicated in European Regulation No.834/2007 and in European Regulation No.889/08.

In a disclosure, not pertaining to the invention, the base ingredient, when present in fluid form, comprises a protein and/or fibrous portion and a sugary liquid component and it can be treated in order to separate the protein and/or fibrous portion thereof from the sugary liquid component.

The sugary liquid component contains simple sugars, such as maltose, glucose, etc. and is free from saccharose.

Using the protein and/or fibrous portion, the base ingredient, and/or the consequent food product, is enriched in proteins and/or noble substances contained in the fibrous part thereof. The base ingredient thus obtained, having had the starches and sugars present in the liquid component taken away,is more dietetic and has a lower calorie content than the base ingredient before separation. The protein and/or fibrous portion obtained from the base ingredient is suitable for being used as such and/or for enriching the food product with proteins and/or noble substances. Such a protein and/or fibrous portion is also suitable for being used for other purposes, for example as a component of cosmetic or medical compositions and/or as a component of food supplements.

Using the sugary liquid component, which can be as such or variously concentrated, the base ingredient, and/or the consequent food product, is sweetened.

The addition of such a sugary liquid substance, free from saccharose or other added sugars, makes it possible to obtain a base ingredient and/or a food product without the need to declare the presence of sweeteners in them.

The sugary liquid, protein and/or fibrous component, obtained from the base ingredient is suitable for being used as such and/or as a sweetener for the food product object of the present disclosure, not pertaining to the invention. Such a sugary liquid component is also suitable for being used for other purposes, for example as a component of cosmetic or medical compositions and/or as a component of food supplements.

In a further embodiment, especially in the case of wholegrain or sprouted wholegrain seeds, the food product according to the invention can be treated through enzyme processes, such as glucotransaminase-based treatments for compacting the proteins and/or alpha-beta-amylase treatments that hydrolyse the starches, and/or, in general, treatments with other enzymes and/or through acid-lactic fermentation. Such enzyme and/or fermentation processes are suitable for facilitating the bio- availability of the seeds themselves.

However, such enzymes are not limited to the examples indicated above and can be variously used as such and/or in mixtures to obtain the desired food product.

In an embodiment of the disclosure, the enzyme treatments used determine a hydrolysation of the starches in sugars whereas fermentation processes do not take place.

The food product according to the disclosure can be at least partially dried through atomisation treatments, roller drum, microwaves, heat treatments, desiccators, dehydrators, etc.

Following such drying and/or following concentration, the percentage of water present in the aforementioned food product can be between 1% and 95% for processing requirements of the product itself.

The food product of the present invention comprises pure water and/or purified water and/or mineral water and/or spring water, an/or said product comprises a percentage of water between 1 and 95%, wherein said food product is in solid form. Such milk substitutes and/or drinks can also be enriched with proteins or sweeteners, thanks to the use of the protein and/or fibrous portion or of the sugary liquid component of the base ingredient.

The food product according to the invention, based on seeds obtained from cereals and variously added to and/or dried, can undergo UHT sterilization treatments. The food product according to the disclosure is then packaged to be suitable for subsequent commercialization.

In a non-limiting disclosure of the invention, the food product according to the present invention undergoes high-pressure treatments, with optimal pressure values within a range between 3000 and 15000 bar, suitable for lowering the microbe content thereof.

In this way the food product according to the present invention is prevented from undergoing heavy alterations in nutritional content and in the organoleptic characteristics thereof.

The food product according to the disclosure, not pertaining to the invention, is in the form of a food substitute, in other words a food replacement, which is vegetable-based and in particular cereal seed-based, suitable for replacing, in the food industry, products of animal origin. Such a substitute can be a substitute for cheese, meat, fish or preparations for the confectionary industry, according to whether it replaces and has the characteristics - such as taste, aroma and consistency - of cheese, meat, fish or of preparations for the confectionary industry of conventional origin.

Such a substitute can also be a milk substitute and/or a vegetable drink.

Such substitutes can be used as such or in industrial or home-made preparations, like, as a non-limiting example, savoury preparations such as cheeses, meats, fish, etc. or sweet preparations, such as pudding, yoghurt, sour cream, cream spreads and preparations usually made using milk of animal origin, and/or milk substitute itself.

Therefore, the food product according to the disclosure, based on the various percentages, compositions and mixtures of the thickeners, of the flavourings and, possibly, of the lipids that it contains, can have a particular or desired taste, composition and aroma.

The food product according to the present disclosure, not pertaining to the invention, therefore, replaces "original" foodstuffs, such as cheese, meat, fish, sweets, milk, drinks, etc.

However, since it is of vegetable instead of animal origin, such a food product can also be used by people suffering from allergies, intolerances, particular pathologies, or who follow certain diets such as vegetarians, vegans and, in general, anybody who prefers to use foodstuffs of vegetable origin rather that foodstuffs of another origin.

Moreover, the food product according to the present disclosure not pertaining to the invention, can be used as an ingredient for various food preparations, both sweet and savoury.

## Claims

1. Vegetable food product, free from saccharose, lactose, egg and soybean, comprising a base ingredient, wherein said base ingredient comprises water and micronized particles of gluten-free wholegrain cereal seeds, and is in the form of a fluid and/or anhydrous powder, wherein said micronized particles have a size of less than 30 microns, wherein said vegetable food product further comprises thickeners, of natural and/or artificial origin which determine an increase in the density and consistency of the base ingredient, and flavourings, which flavourings give said food product a food substitute character for cheese wherein:
- said gluten-free cereals are selected from the group consisting of rice, corn, millet, buckwheat, sorghum, amaranth, quinoa;
- said thickeners comprise carrageenan and/or agar-agar and/or starches and/or carob seeds and/or guar and/or xanthan;
- said flavourings comprise diacetyl and butyric acid, to give a butter flavour, and/or valerenic acid and/or isobutyric acid, to give a cheese flavour and/or heptanonemethylthiobutyrate, to give a gorgonzola flavour, and
wherein said food product comprises lipids, such as coconut oil and/or olive oil, and/or seed oil and/or vegetable oil and/or vegetable margarines, and said food product is pasteurised or treated at a pressure within a range between 3000 and 15000 bar.

2. Food product according to claim 1, wherein said wholegrain seeds are sprouted seeds and/or wherein said seeds are rice seeds.

3. Food product according to claim 1 or 2, wherein said food product comprises seeds rich in bioavailable nutritional substances obtained through treatments such as enzyme processes, like glucotransaminase-based treatments for compacting proteins and/or alpha-beta-amylases that hydrolyse starches, and/or, treatments with other enzymes and/or through acid-lactic fermentation.

4. Food product according to one of the previous claims, wherein said food product comprises pure water and/or purified water and/or mineral water and/or spring water, and/or wherein said food product comprises a percentage of water of between 1% and 95%, wherein said food product is in solid form.

5. Food product according to one of the previous claims, wherein said food product is sterilised by UHT.

## Patentansprüche

1. Gemüse-Nahrungsmittelprodukt ohne Saccharose, Laktose, Eier und Soja, welches einen Grundinhaltsstoff umfasst, worin der Grundinhaltsstoff Wasser und mikronisierte Teilchen an glutenfreien Vollkorn-Cerealiensamen enthält und in Form eines Fluids und/oder wasserfreien Pulvers vorliegt, worin die mikronisierten Teilchen eine Größe von kleiner als 30 µm aufweisen, worin das Gemüse-Nahrungsmittelprodukt weiter Verdickungsmittel natürlichen und/oder künstlichen Ursprungs umfasst, welche einen Anstieg der Dichte und Konsistenz des Grundinhaltsstoffs bewirken, und Geschmacksstoffe, die dem Nahrungsmittelprodukt Nahrungsmittelersatz-Eigenschaften für Käse verleihen, worin:
- die glutenfreien Cerealien ausgewählt sind aus der Gruppe bestehend aus Reis, Getreide, Amarant, Quinoa; Hirse, Buchweizen, Sorghum,
- das Verdickungsmittel Carrageenan und/oder Agar-Agar und/oder Stärken und/oder Johannisbrotsamen und/oder Guar und/oder Xanthan umfasst;
- die Geschmacksstoffe Weinsäure und Buttersäure umfassen, um einen Buttergeschmack zu ergeben, und/oder Valerensäure und/oder Isobuttersäure, um einen Käsegeschmack zu ergeben und/oder Heptanonmethylthiobutyrat, um einen Gorgonzolageschmack zu ergeben, and
worin das Nahrungsmittelprodukt Lipide umfasst, wie Kokosnussöl und/oder Olivenöl und/oder Samenöl und/oder Gemüseöl und/oder Gemüsemargarine, und worin das Nahrungsmittelprodukt pasteurisiert oder bei einem Druck in einem Bereich von zwischen 3000 und 15000 Bar behandelt ist.

2. Nahrungsmittelprodukt nach Anspruch 1, worin die Volkornsamen Keimlinge sind und/oder worin die Samen Reissamen sind.

3. Nahrungsmittelprodukt nach Anspruch 1 oder 2, worin das Nahrungsmittelprodukt Samen umfassen, die reich sind an bioverfügbaren Nährstoff-Substanzen, welche mittels Behandlungen erhalten werden, wie enzymatischen Verfahren, Verdichten, wie Glucotransaminase-basierten Behandlungen für Proteine und/oder alpha-beta-Amylasen, die Stärken hydrolysieren, und/oder Behandlungen mit anderen Enzymen und/oder mittels Milchsäuregärung.

4. Nahrungsmittelprodukt nach einem der vorstehenden Ansprüche, worin das Nahrungsmittelprodukt reines Wasser und/oder gereinigte Wasser und/oder Mineralwasser und/oder Quellwasser umfasst, und/oder worin das Nahrungsmittelprodukt einen Prozentsatz an Wasser von zwischen 1% und 95% umfasst, worin das Nahrungsmittelprodukt in fester Form ist.

5. Nahrungsmittelprodukt nach einem der vorstehenden Ansprüche, worin das Nahrungsmittelprodukt mittels UHT sterilisiert ist.

## Revendications

1. Produit alimentaire végétal, exempt de saccharose, de lactose, d'oeuf et de soja, comprenant un ingrédient de base, dans lequel ledit ingrédient de base comprend de l'eau et des particules micronisées de graines de céréales entières sans gluten, et est sous la forme d'un fluide et/ou d'une poudre anhydre, dans lequel lesdites particules micronisées ont une taille inférieure à 30 micromètres, lequel produit alimentaire végétal comprend en outre des épaississants, d'origine naturelle et/ou artificielle, qui déterminent une augmentation de la densité et de la consistance de l'ingrédient de base, et des arômes, lesquels arômes donnent audit produit alimentaire un caractère de substitut alimentaire du fromage, dans lequel :
- lesdites céréales sans gluten sont choisies dans le groupe constitué par le riz, le maïs, le millet, le sarrasin, le sorgho, l'amarante, le quinoa ;
- lesdits épaississants comprennent de la carraghénane et/ou de l'agar-agar et/ou des amidons et/ou des graines de caroube et/ou du guar et/ou du xanthane ;
- lesdits arômes comprennent de l'acide diacétyle et butyrique, pour donner un goût de beurre, et/ou de l'acide valérénique et/ou de l'acide isobutyrique, pour donner un goût de fromage, et/ou du thiobutyrate d'heptanoneméthyle, pour donner un goût de gorgonzola, et
- lequel produit alimentaire comprend des lipides, tels que l'huile de coco et/ou l'huile d'olive et/ou une huile de coton et/ou une huile végétale et/ou des margarines végétales, et lequel produit alimentaire est pasteurisé ou traité sous une pression située dans la plage comprise entre 3 000 et 15 000 bar.

2. Produit alimentaire selon la revendication 1, dans lequel lesdites graines entières sont des graines germées, et/ou dans lequel lesdites graines sont des grains de riz.

3. Produit alimentaire selon la revendication 1 ou 2, lequel produit alimentaire comprend des graines riches en substances nutritionnelles biodisponibles obtenues par des traitements tels que des transformations enzymatiques, comme des traitements à base de glucotransaminase pour compacter les protéines et/ou d'alpha,bêta-amylases qui hydrolysent les amidons, et/ou des traitements avec d'autres enzymes et/ou par l'intermédiaire d'une fermentation lactique.

4. Produit alimentaire selon l'une des revendications précédentes, dans lequel ledit produit alimentaire comprend de l'eau pure et/ou de l'eau purifiée et/ou de l'eau minérale et/ou de l'eau de source, et/ou lequel produit alimentaire comprend un pourcentage d'eau compris entre 1 % et 95 %, lequel produit alimentaire est sous forme solide.

5. Produit alimentaire selon l'une des revendications précédentes, lequel produit alimentaire est stérilisé par UHT.
